(19) **Europäisches Patentamt / European Patent Office / Office européen des brevets**

(11) **EP 4 395 110 A1**

(12) **EUROPEAN PATENT APPLICATION**
published in accordance with Art. 153(4) EPC

(43) Date of publication:
**03.07.2024 Bulletin 2024/27**

(21) Application number: **22942021.1**

(22) Date of filing: **18.05.2022**

(51) International Patent Classification (IPC):
**H02J 7/00** (2006.01)

(52) Cooperative Patent Classification (CPC):
**H02J 7/00**

(86) International application number:
**PCT/CN2022/093641**

(87) International publication number:
**WO 2023/220979 (23.11.2023 Gazette 2023/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **LI, Zhiqiang**
  **Ningde, Fujian 352100 (CN)**
• **ZENG, Chao**
  **Ningde, Fujian 352100 (CN)**
• **LUO, Shaohua**
  **Ningde, Fujian 352100 (CN)**
• **WANG, Shengwei**
  **Ningde, Fujian 352100 (CN)**

(74) Representative: **Holt, Lucy Rose et al**
**Maucher Jenkins**
**Seventh Floor Offices**
**Artillery House**
**11-19 Artillery Row**
**London SW1P 1RT (GB)**

(54) **CHARGING METHOD AND APPARATUS, AND ELECTRONIC DEVICE AND STORAGE MEDIUM**

(57)    Disclosed in the present application are a charging method and apparatus, and an electronic device and a storage medium. The method comprises: acquiring a charging parameter of each battery module in a battery pack in the current charging mode, wherein the battery pack has a plurality of battery modules, and the current charging mode comprises a series charging mode; and if it is determined, on the basis of the charging parameters of the battery modules, that any two battery modules meet a charging conversion condition, then controlling the plurality of battery modules to be switched from the series charging mode to a parallel charging mode. In this way, conversion from series charging to parallel charging is realized before charging and discharging currents of a battery pack become excessive, such that the risk of lithium precipitation of a battery is reduced, and the charging safety of the battery pack is improved.

Obtain charging parameters of each battery module in a battery pack in a current charging mode — S200

After determining, based on the charging parameters of each battery module, that any two battery modules meet a charging switching condition, control the plurality of battery modules to switch from the series charging mode to a parallel charging mode — S210

FIG. 2

EP 4 395 110 A1

# Description

## Technical Field

The present disclosure relates to the technical field of batteries, in particular to a charging method and apparatus, an electronic device, and a storage medium.

## Background Art

The 800 V charging architecture of the existing solution includes two battery modules. When the system judges that 800 V charging is available, the two battery modules are charged in series to speed up the charging. After charging, the two battery modules are switched into parallel, and a conventional 400 V voltage is output as the working voltage.

However, in this charging mode, the high-voltage battery module discharges to the low-voltage battery module, resulting in an instantaneous large charging and discharging current, which brings battery safety problems such as heating and lithium precipitation.

## Summary

In view of the above problems, the present disclosure provides a charging method and apparatus, an electronic device, and a storage medium.

In a first aspect, the present disclosure provides a charging method, which includes: obtaining charging parameters of each battery module in a battery pack in a current charging mode, wherein the battery pack has a plurality of battery modules, and the current charging mode includes a series charging mode; and after determining, based on the charging parameters of each battery module, that any two battery modules meet a charging switching condition, controlling the plurality of battery modules to switch from the series charging mode to a parallel charging mode.

In the technical solutions of the embodiments of the present disclosure, the charging parameters of each battery module are collected in the mode that a plurality of battery modules in the battery pack are charged in series, and then if it is determined, based on the charging parameters of each battery module, that any two battery modules meet a charging switching condition, it indicates that there may be problems such as heating and lithium precipitation caused by the too large charging and discharging current in the series charging mode, or other potential damage to the battery caused by the too large charging and discharging current. On this basis, a plurality of battery modules of the battery pack are controlled to switch from the series charging mode to a parallel charging mode, so that the battery pack can be switched from series charging to parallel charging before the charging and discharging current is too large, thereby reducing the risk of lithium precipitation of the battery, or avoiding other problems that may cause damage to the battery, and improving the charging safety of the battery pack.

In some embodiments, the charging parameters include a module voltage, and the step of determining, based on the charging parameters of each battery module, that any two battery modules meet a charging switching condition includes: calculating a module voltage difference between every two battery modules in the plurality of battery modules; and if the module voltage difference between any two battery modules exceeds a preset voltage difference threshold, determining that any two battery modules meet the charging switching condition. In the embodiments of the present disclosure, the module voltage of the battery module is detected, then the module voltage difference between every two battery modules is calculated, and the charging switching condition is judged according to the comparison between the module voltage difference between the battery modules and the preset voltage difference threshold, so that the battery pack can be controlled to switch from the series charging mode to the parallel charging mode in time under the condition that the module voltage difference between the battery modules is larger, thereby reducing the risk of lithium precipitation of the battery, or avoiding other problems that may cause damage to the battery, and improving the charging safety of the battery pack.

In some embodiments, the charging parameters include a battery module voltage and a battery cell temperature, and the step of determining, based on the charging parameters of each battery module, that any two battery modules meet a charging switching condition includes: determining a highest battery cell temperature according to the battery cell temperature of each battery module; calculating a module voltage difference between every two battery modules in the plurality of battery modules; calculating a charging switching value between corresponding two battery modules according to a module voltage difference between every two battery modules and the highest battery cell temperature; and if the charging switching value between any two battery modules exceeds a preset charging switching threshold, determining that any two battery modules meet the charging switching condition. In the embodiments of the present disclosure, the module voltage and battery cell temperature of battery modules are detected, then the module voltage difference between every two battery modules and the highest battery cell temperature are calculated, the charging switching value is calculated according to the module voltage difference between the battery modules and the highest battery cell temperature, and then the charging switching value is compared with a preset charging switching threshold. In this way, the battery pack can be controlled to switch from the series charging mode to the parallel charging mode in time when the charging switching value is larger than the preset charging switching threshold, so that the charging switching condition can be accurately judged based on the module voltage difference and the battery cell temperature, and the risk of lithium precipitation of the battery can be more accurately reduced, and the charging safety of the battery pack can be improved.

In some embodiments, the step of calculating a charging switching value between corresponding two battery modules according to a module voltage difference between every two battery modules and the highest battery cell temperature includes: through a charging switching value calculation formula, calculating a charging switching value between corresponding two battery modules according to a module voltage difference between every two battery modules and the highest battery cell temperature, wherein the charging switching value calculation formula is : $M = kT + U$, where M denotes the charging switching value between two battery modules, k denotes a preset coefficient, T denotes the highest battery cell temperature, and U denotes the module voltage difference between the corresponding two battery modules. In the embodiments of the present disclosure, through the charging switching value calculation formula, the charging switching value is accurately calculated according to the module voltage difference between the battery modules and the highest battery cell temperature, so that the charging switching condition can be judged more accurately according to the accurately calculated charging switching value, and the accurate control of switching from series charging to parallel charging can be realized.

In some embodiments, the charging parameters include the module voltage; and before the step of determining, based on the charging parameters of each battery module, that any two battery modules meet a charging switching condition, the method further includes: determining a target battery module among the plurality of battery modules according to the module voltage of each battery module; and reducing the module voltage of the target battery module.

In some embodiments, the step of determining a target battery module among the plurality of battery modules according to the module voltage of each battery module includes: determining a battery module with a highest module voltage among the plurality of battery modules as the target battery module. In the embodiments of the present disclosure, according to the module voltage of each battery module, the battery module among a plurality of battery modules with the highest module voltage is determined as the target battery module, and then the module voltage of the battery module with the highest module voltage is reduced, thereby reducing the module voltage difference between the battery modules during the charging process of the battery pack, extending the time when the module voltage difference is larger than the preset voltage difference threshold or the charging switching value is larger than the preset charging switching threshold, and further delaying the time of switching from series charging to parallel charging, so that the duration of battery pack charging in series is prolonged, and the battery pack charging in series has a higher charging efficiency compared with parallel charging, thereby improving the charging efficiency of the battery pack while ensuring that the battery pack does not have safety problems such as lithium precipitation.

In some embodiments, the step of reducing the module voltage of the target battery module includes: consuming the module voltage of the target battery module by using a load circuit, so as to reduce the module voltage of the target battery module. In the embodiments of the present disclosure, the module voltage of the target battery module is directly consumed through the load circuit, so that the module voltage of the target battery module is reduced in a simple way.

In some embodiments, the step of reducing the module voltage of the target battery module includes: obtaining a cell voltage of each battery cell in the target battery module; determining a battery cell with a highest cell voltage as a target battery cell; and consuming electricity of the target battery cell by using a load circuit, so as to reduce the module voltage of the target battery module. In the embodiments of the present disclosure, first, the battery cell with the highest cell voltage in the target battery module is determined as the target battery cell, and then the electricity of the target battery cell is consumed by using the load circuit, so as to reduce the module voltage of the target battery module, so that the voltage reduction is more targeted and accurate.

In a second aspect, the present disclosure provides a charging apparatus, including: an obtaining module, configured for obtaining charging parameters of each battery module in a battery pack in a current charging mode, wherein the current charging mode includes a series charging mode; and a control module, configured for controlling the plurality of battery modules to switch from the series charging mode to a parallel charging mode after determining, based on the charging parameters of each battery module, that any two battery modules meet a charging switching condition.

In the technical solutions of the embodiments of the present disclosure, in the mode that a plurality of battery modules in a battery pack are charged in series, the charging parameters of each battery module are collected, and then if it is determined, based on the charging parameters of each battery module, that any two battery modules meet a charging switching condition, it indicates that there may be problems such as heating and lithium precipitation caused by the too large charging and discharging current in the series charging mode. On this basis, a plurality of battery modules of the battery pack are controlled to switch from the series charging mode to the parallel charging mode, so that the battery pack can be switched from series charging to parallel charging before the charging and discharging current is too large, thereby reducing the risk of lithium precipitation of the battery, and improving the charging safety of the battery pack.

In some embodiments, the charging parameters include the module voltage, and the apparatus further includes a determination module, which is specifically configured for: calculating a module voltage difference between every two battery modules in the plurality of battery modules; and if the module voltage difference between any two battery modules exceeds a preset voltage difference threshold, determining that any two battery modules meet the charging switching condition.

In some embodiments, the charging parameters include a battery module voltage and a battery cell temperature, and the determination module is specifically configured for: determining a highest battery cell temperature according to the battery cell temperature of each battery module; calculating a module voltage difference between every two battery modules in the plurality of battery modules; calculating a charging switching value between corresponding two battery modules according to a module voltage difference between every two battery modules and the highest battery cell temperature; and if the charging switching value between any two battery modules exceeds a preset charging switching threshold, determining that any two battery modules meet the charging switching condition.

In some embodiments, the determination module is further specifically configured for: through a charging switching value calculation formula, calculating a charging switching value between corresponding two battery modules according to a module voltage difference between every two battery modules and the highest battery cell temperature, wherein the charging switching value calculation formula is: $M = kT + U$, where M denotes the charging switching value between two battery modules, k denotes a preset coefficient, T denotes the highest battery cell temperature, and U denotes the module voltage difference between the corresponding two battery modules.

In some embodiments, the charging parameters include the module voltage. The determination module is further configured for determining a target battery module among the plurality of battery modules according to the module voltage of each battery module. The apparatus further includes a voltage reduction module for reducing the module voltage of the target battery module.

In some embodiments, the determination module is further specifically configured for determining a battery module with a highest module voltage among the plurality of battery modules as the target battery module.

In some embodiments, the voltage reduction module is specifically configured for consuming the module voltage of the target battery module by using a load circuit, so as to reduce the module voltage of the target battery module.

In some embodiments, the voltage reduction module is further specifically configured for: obtaining a cell voltage of each battery cell in the target battery module; determining a battery cell with a highest cell voltage as a target battery cell; and consuming electricity of the target battery cell by using a load circuit, so as to reduce the module voltage of the target battery module.

In a third aspect, the present disclosure provides an electronic device, which includes a memory and a processor, wherein the memory stores a computer program, and the processor, when executing the computer program, performs the method in any optional implementation of the first aspect.

In a fourth aspect, the present disclosure provides a computer-readable storage medium, on which a computer program is stored, and the computer program, when executed by a processor, performs the method in any optional implementation of the first aspect.

In a fifth aspect, the present disclosure provides a computer program product, and the computer program product, when run on a computer, causes the computer to execute the method in any optional implementation of the first aspect.

The above description is only an overview of the technical solutions of the present disclosure. In order to understand the technical means of the present disclosure more clearly, so that it can be implemented according to the contents of the specification, and in order to make the above and other objectives, features and advantages of the present disclosure more obvious and understandable, the specific implementation of the present disclosure is described below.

**Brief Description of Drawings**

Various other advantages and benefits will become clear to those ordinarily skilled in the art by reading the following detailed description of the preferred implementations. The accompanying drawings are intended only for illustrating the preferred implementations, and should not be considered as limiting the present disclosure. Moreover, like parts are denoted by like reference numerals throughout the drawings. In the accompanying drawings:

FIG. 1 is a structural schematic diagram of a vehicle provided by the present disclosure;

FIG. 2 is a first flow chart of a charging method provided by the present disclosure;

FIG. 3 is a schematic diagram of a circuit topology provided by the present disclosure;

FIG. 4 is a second flow diagram of the charging method provided by the present disclosure;

FIG. 5 is a third flow diagram of the charging method provided by the present disclosure;

FIG. 6 is a fourth flow diagram of the charging method provided by the present disclosure;

FIG. 7 is a structural schematic diagram of a charging apparatus provided by the present disclosure; and

FIG. 8 is a structural schematic diagram of an electronic device provided by the present disclosure.

The reference numerals in the Detailed Description are as follows:
10- vehicle; 100- battery; 200- controller; 300- motor; B1, B2- battery modules; S1, S2, S3- switches; 700- obtaining module; 710- control module; 720- determination module; 730- voltage reduction module; 8- electronic device; 801- processor; 802- memory; 803- communication bus.

## Detailed Description of Embodiments

Embodiments of the technical solutions of the present disclosure will be described in detail with reference to the accompanying drawings. The following embodiments are intended only to illustrate the technical solutions of the present disclosure more clearly, and are therefore intended as examples only and cannot be used to limit the scope of protection of the present disclosure.

Unless otherwise defined, all technical and scientific terms used herein have the same meaning as commonly understood by those skilled in the art of the present disclosure. The terms used herein is only for the purpose of describing specific embodiments, and is not intended to limit the present disclosure. The terms "include", "comprise" and "have" in the description, claims and the above description of drawings of the present disclosure, as well as any variations thereof, are intended to cover non-exclusive inclusion.

In the description of the embodiments of the present disclosure, the technical terms "first" and "second" , etc. are only intended to distinguish different objects, and cannot be understood as indicating or implying relative importance or implicitly indicating the number, the specific order or the primary-secondary relationship of the indicated technical features. In the description of the embodiments of the present disclosure, "a plurality of" means more than two, unless otherwise expressly and specifically defined.

Reference to "embodiment" herein indicates that a particular feature, a structure or a characteristic described in conjunction with an embodiment may be included in at least one embodiment of the present disclosure. The occurrence of this phrase in various places in the specification does not necessarily refer to the same embodiment, nor is it an independent or optional embodiment mutually exclusive with other embodiments. It is understood explicitly and implicitly by those skilled in the art that the embodiments described herein may be combined with other embodiments.

In the description of the embodiments of the present disclosure, the term "and/or" only indicates a relation describing the related objects, which indicates that there may be three kinds of relations. For example, "A and/or B" may indicate that A exists alone, A and B exist at the same time, or B exists alone. In addition, the character "/" herein generally indicates that the contextual objects have an "OR" relation.

In the description of the embodiments of the present disclosure, the term "a plurality of" refers to more than two (including two), similarly, "a plurality of groups" refers to more than two groups (including two groups), and "a plurality of pieces" refers to more than two pieces (including two pieces).

In the description of the embodiments of the present disclosure, the technical terms "central", "longitudinal", "lateral ", "length", "width", "thickness", "front", "rear", "left", "vertical ", "horizontal", "top", "bottom", "outside", "clockwise", "counterclockwise", " axial", "radial" or "circumferential", etc. indicates an orientation or a position relationship based on the orientation or the position shown in the accompanying drawings, which is only for the convenience of describing the embodiments of the present disclosure and simplifying the description, and does not indicate or imply that the referred apparatus or element must have a specific orientation, be constructed and operated in a specific orientation, so it cannot be understood as limiting the embodiments of the present disclosure.

In the description of the embodiments of the present disclosure, unless otherwise specified and defined, technical terms such as "install", "connect" and "fix" should be broadly understood, for example, they may mean fixed connection, detachable connection or integration, may mean mechanical connection or electrical connection, and may mean direct connection, or indirect connection through an intermediate medium, or internal communication between two elements, or interaction between two elements. For those ordinarily skilled in the art, the specific meanings of the above terms in the embodiments of the present disclosure can be understood according to the specific circumstances.

At present, in the 800 V charging architecture of new energy batteries, a battery pack contains two battery modules. In order to speed up the charging, when charging at 800 V, the two battery modules are charged in series, and after charging, the two battery modules are switched into parallel, and a conventional 400 V voltage is output as the working voltage.

The inventors noticed that the conventional new energy battery with 800 V charging architecture in the market at present has insufficient consistency between the two battery modules in the battery pack, and the voltages will be inconsistent when charging in series, which leads to the high-voltage battery module being discharged at the moment when it is switched into parallel after charging, and forces the low-voltage battery module to charge. Because the internal resistance of the two battery modules is very small, the current will be very large during the instantaneous charging and discharging, which leads to the safety problems of battery heating and even fire, and lithium precipitation.

The inventors found that the charging parameters of the battery, such as the voltage and/or the temperature of the battery, can be continuously monitored during the charging process, so that after the voltage difference and/or the temperature of the two battery modules reach a certain relationship, they are switched to parallel charging, thus avoiding the problems such as heating and lithium precipitation caused by the too large charging and discharging current after charging.

After in-depth research, the inventors designed a charging method and apparatus, an electronic device, and a storage medium. According to the charging method, the charging parameters of each battery module in the charging mode is monitored, and it is judged whether any two battery modules meet the charging switching condition according to the charging parameters of each battery module. If any two battery modules meet the charging switching condition, the battery modules are controlled to switch from the series charging mode to the parallel charging mode, thus avoiding the problems such as heating and lithium precipitation caused by the too large charging and discharging current after charging, and improving the battery charging safety.

The charging method and apparatus, the electronic device, and the storage medium disclosed in the embodiments of the present disclosure may be applied to power equipment using batteries as power sources, including but not limited to electrical apparatuses such as vehicles, ships or aircraft.

For the convenience of description, according to an embodiment of the present disclosure, the following takes a vehicle 10 as the electrical apparatus for example.

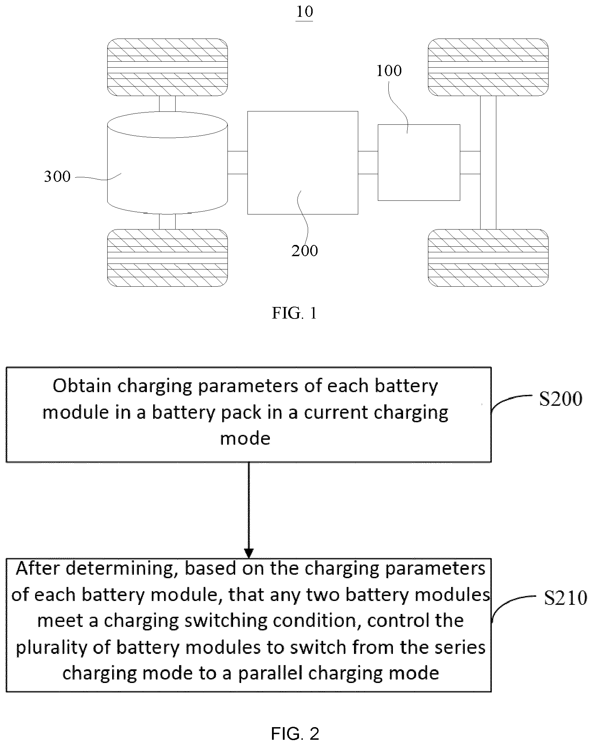

Please refer to FIG. 1, which is a structural schematic diagram of the vehicle 10 provided by some embodiments of the present disclosure. The vehicle 10 may be a fuel vehicle, a gas vehicle or a new energy vehicle, and the new energy vehicle may be a pure electric vehicle, a hybrid electric vehicle or an extended-range vehicle, etc. A battery 100 is arranged inside the vehicle 10, and the battery 100 may be arranged at the bottom, the head or the tail of the vehicle 10. The battery 100 may be used for power supply of the vehicle 10. For example, the battery 100 may be used as an operating power supply of the vehicle 10. The vehicle 10 may further include a controller 200 and a motor 300, and the controller 200 is configured for controlling the battery 100 to supply power to the motor 300, for example, for the power demand of the vehicle 10 when it is started, navigating and running.

In some embodiments of the present disclosure, the battery 100 may not only be used as an operating power supply for the vehicle 10, but also be used as a driving power supply for the vehicle 10, providing driving power for vehicle 10 instead or partially instead of fuel oil or natural gas.

It should be noted here that in the present disclosure, the battery 100 is used as the driving power source of the vehicle 10, and provides the driving power for the vehicle 10.

The present disclosure provides a charging method, which may be applied to a computing device, including but not limited to a battery management system (BMS), a processor computer, etc. As shown in FIG. 2, the method specifically includes the following steps:

step S200: obtaining charging parameters of each battery module in a battery pack in a current charging mode; and

step S210: after determining, based on the charging parameters of each battery module, that any two battery modules meet a charging switching condition, controlling the plurality of battery modules to switch from the series charging mode to a parallel charging mode.

In the above implementation, the battery pack has a plurality of battery modules, for example, the battery pack may include two battery modules or three battery modules.

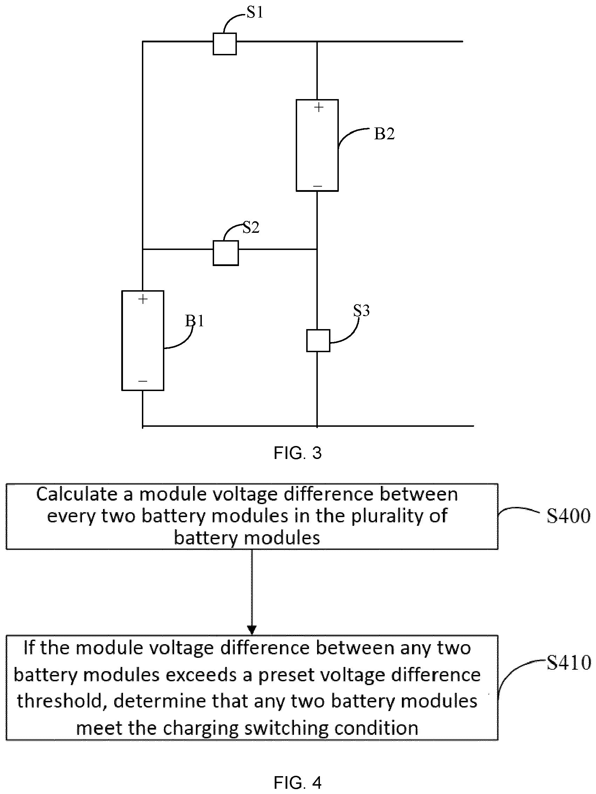

On the basis of the above, the battery pack charging modes include a series charging mode and a parallel charging mode. The series charging mode means that all battery modules in the battery pack are charged in series, and the parallel charging mode means that all battery modules in the battery pack are charged in parallel. For example, taking two battery modules in FIG. 3 as an example, when switches S1 and S3 are switched off and switch S2 is switched on, the battery modules B1 and B2 are charged in series; and when switches S1 and S3 are switched on and switch S2 is switched off, the battery modules B1 and B2 are charged in parallel. In the case of a plurality of battery modules, the principle is similar and will not be described here.

In step S200, the current charging mode represents the series charging mode, that is, the battery modules in the battery pack are all charged in series, that is, the charging parameters of each battery module are collected when the battery modules in the battery pack are all charged in series in step S200. The charging parameters of each battery module may include the module voltage of the battery module, the battery cell temperature of the battery module, etc.

After collecting the charging parameters of each battery module in the battery pack, it can be determined whether any two battery modules meet the charging switching condition based on the charging parameters of each battery module. If any two battery modules meet the charging switching condition, it indicates that there may be safety problems in the current series charging mode. On this basis, the plurality of battery modules of the battery pack are controlled to switch from the series charging mode to the parallel charging mode. Specifically, according to the circuit structure shown in FIG. 3, the switches S1 and S3 may be switched off and the switch S2 may be switched on in the series charging mode. On this basis, when the series charging mode is switched to the parallel charging mode in step S220, the switches S1 and S3 may be controlled to be switched on, and the switch S2 may be controlled to be switched off, thus realizing the switching from series charging to parallel charging.

According to the charging method described above, the charging parameters of each battery module are collected in the mode that a plurality of battery modules in the battery pack are charged in series, and then if it is determined, based on the charging parameters of each battery module, that any two battery modules meet a charging switching condition, it indicates that there may be problems such as heating and lithium precipitation caused by the too large charging and discharging current in the series charging mode. On this basis, a plurality of battery modules of the battery pack are controlled to switch from the series charging mode to the parallel charging mode, so that the battery pack can be switched from series charging to parallel charging before the charging and discharging current is too large, thereby reducing the risk of lithium precipitation of the battery, and improving the charging safety of the battery pack.

According to some embodiments of the present disclosure, the charging parameters of the aforementioned battery modules may include the module voltages of the battery modules as described above, and on this basis, as shown in FIG. 4, the step of determining, based on the charging parameters of each battery module, that any two battery modules meet a charging switching condition in the aforementioned step 210 may include the following steps:

step S400: calculating a module voltage difference between every two battery modules in the plurality of battery modules; and

step S410: if the module voltage difference between any two battery modules exceeds a preset voltage difference threshold, determining that any two battery modules meet the charging switching condition.

In step S400, after the module voltage of each battery module is collected, the module voltage difference between every two battery modules may be calculated according to the module voltage of each battery module. Assuming that there are three battery modules, and the module voltages of the three battery modules are U1, U2 and U3 respectively, then the three module voltage differences may be calculated, i.e., U12 = U1-U2, U13=U1-U3, and U23=U2-U3。

On the basis of the above, the module voltage difference between any two battery modules is compared with the preset voltage difference threshold. For example, assuming that the preset voltage difference threshold is U, in the above example, the magnitudes of U12, U13 and U23 may be compared with U respectively. If any module voltage difference exceeds the voltage difference threshold U, it indicates that the module voltage difference between the two battery modules that exceeds the voltage difference threshold U is too large, which may result in heating and lithium precipitation caused by the large charging and discharging current. Therefore, at this time, it is determined that any two battery modules meet the charging switching condition, so that step S220 is executed to control the plurality of battery modules of the battery pack to switch from the series charging mode to the parallel charging mode.

In the embodiments of the present disclosure, the module voltage of the battery module is detected, then the module voltage difference between every two battery modules is calculated, and the charging switching condition is judged according to the comparison between the module voltage difference between the battery modules and the preset voltage difference threshold, so that the battery pack can be controlled to switch from the series charging mode to the parallel charging mode in time under the condition that the module voltage difference between the battery modules is larger, thereby reducing the risk of lithium precipitation of the battery, and improving the charging safety of the battery pack.

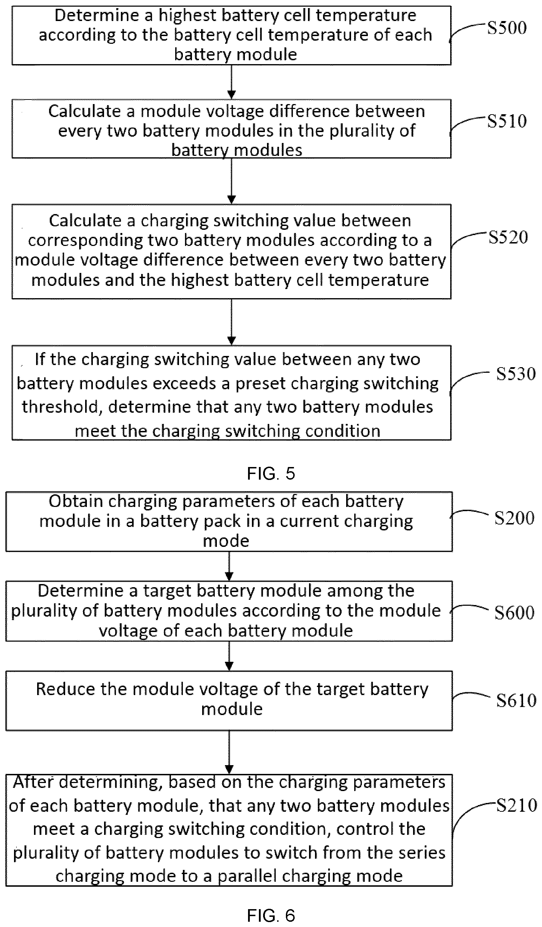

According to some embodiments of the present disclosure, in addition to voltage changes, battery cell temperature changes often occur during the charging process of the battery pack, and the battery cell temperature changes can affect the boundary threshold of the module voltage difference. Therefore, the charging switching condition can be judged not only by the module voltage difference, but also by the module voltage difference and the battery cell temperature jointly. On this basis, as shown in FIG. 5, the step of determining, based on the charging parameters of each battery module, that any two battery modules meet a charging switching condition in the aforementioned step S210 may include the following steps:

step S500: determining a highest battery cell temperature according to the battery cell temperature of each battery module;

step S510: calculating a module voltage difference between every two battery modules in the plurality of battery modules;

step S520: calculating a charging switching value between corresponding two battery modules according to a module voltage difference between every two battery modules and the highest battery cell temperature; and

step S530: if the charging switching value between any two battery modules exceeds a preset charging switching threshold, determining that any two battery modules meet the charging switching condition.

In the above implementation, each battery module may be provided with a temperature detection device, which can detect the battery cell temperature of the corresponding battery module. On this basis, the highest battery cell temperature in all battery modules can be determined according to the battery cell temperature of each battery module.

Then, step S510 may be executed to calculate the module voltage difference between every two battery modules according to the module voltage of each battery module. The method of calculating the module voltage difference is the same as that of the aforementioned step S400, and will not be repeated here.

On the basis of the above, the charging switching value between two battery modules is calculated according to the module voltage difference between every two battery modules and the highest battery cell temperature, and then the charging switching value between any two battery modules is compared with the preset charging switching threshold. If the charging switching value between any two battery modules exceeds the preset charging switching threshold, it indicates that the module voltage difference between the two battery modules with the preset charging switching threshold is too large, which may result in heating and lithium precipitation caused by the large charging and discharging current. Therefore, at this time, it is determined that any two battery modules meet the charging switching condition, so that step S220 is executed to control the plurality of battery modules of the battery pack to switch from the series charging mode to the parallel charging mode.

For example, suppose there are three battery modules, and the module voltages of the three battery modules are U1, U2 and U3 respectively, then the voltage difference of the three modules may be calculated, i.e., U12 = U1-U2, U13=U1-U3, and U23=U2-U3, and the highest battery cell temperature is T. On this basis, the charging switching value corresponding to the module voltage difference U12 may be calculated as M1, the charging switching value corresponding to the module voltage difference U13 may be calculated as M2, the charging switching value corresponding to the module voltage difference U23 may be calculated as M3, and the preset charging switching threshold may be calculated as M4. On this basis, M1, M2 and M3 are compared with the preset charging switching threshold M4 respectively. If any charging switching value is larger than the preset charging switching threshold M4, it is determined that any two battery modules meet the charging switching condition, so that step S220 is executed to control a plurality of battery modules of the battery pack to switch from the series charging mode to the parallel charging mode.

In the embodiments of the present disclosure, the module voltage and battery cell temperature of battery modules are detected, then the module voltage difference between every two battery modules and the highest battery cell temperature are calculated, the charging switching value is calculated according to the module voltage difference between the battery modules and the highest battery cell temperature, and then the charging switching value is compared with a preset charging switching threshold. In this way, the battery pack can be controlled to switch from the series charging mode to the parallel charging mode in time when the charging switching value is larger than the preset charging switching threshold, so that the charging switching condition can be accurately judged based on the module voltage difference and the battery cell temperature, and the risk of lithium precipitation of the battery can be more accurately reduced, and the charging safety of the battery pack can be improved.

According to some embodiments of the present disclosure, for step S520, the charging switching value may be specifically calculated in the following way. Specifically, the charging switching value may be calculated according to the charging switching value calculation formula, which is:

$$M = kT + U$$

where M denotes the charging switching value between two battery modules, k denotes a preset coefficient, T denotes the highest battery cell temperature, and U denotes the module voltage difference between the corresponding two battery modules.

For example, according to the aforementioned example, $M1 = kT + U_{12}$; $M2 = kT + U_{13}$; $M3 = kT + U_{23}$.

As a possible specific example, the value range of the preset system k may be 0.004 to 0.006. Specifically, the preset coefficient k may be taken as 0.005, and when the preset coefficient k is taken as 0.005, the preset charging switching threshold may be taken as 0.7, that is, when the charging switching value between two battery modules is larger than 0.7, it is determined that any two battery modules meet the charging switching condition, so that step S220 is executed to control a plurality of battery modules of the battery pack to switch from the series charging mode to the parallel charging mode.

In the above embodiment, the charging switching value is accurately calculated according to the module voltage difference between the battery modules and the highest battery cell temperature through the charging switching value calculation formula, so that the charging switching condition can be judged more accurately according to the accurately calculated charging switching value, and the accurate control of switching from series charging to parallel charging can be realized.

According to some embodiments of the present disclosure, it has been described that the charging parameters may include the module voltage. Before the step of determining, based on the charging parameters of each battery module, that any two battery modules meet a charging switching condition in step S210, as shown in FIG. 6, the solution may further include the following steps:

step S600: determining a target battery module among the plurality of battery modules according to the module voltage of each battery module; and

step S610: reducing the module voltage of the target battery module.

In the above implementation, the target battery module is determined based on the module voltage of each battery module. Specifically, the battery module with the highest module voltage among a plurality of battery modules may be determined as the target battery module. For example, the module voltages of the three battery modules are U1, U2 and U3 respectively, and if the module voltage U3 is the highest, the battery module with the module voltage U3 is determined as the target battery module.

On the basis of the above, the module voltage of the battery module with the highest module voltage can be reduced, thus reducing the module voltage difference between the battery modules during battery pack charging, delaying the time when the module voltage difference is larger than the preset voltage difference threshold or the charging switching value is larger than the preset charging switching threshold, and further delaying the time of switching from series charging to parallel charging, so that the duration of battery pack charging in series is prolonged, and the battery pack charging in series has a higher charging efficiency compared with parallel charging, thereby improving the charging efficiency of the battery pack while ensuring that the battery pack does not have safety problems such as lithium precipitation.

As a specific implementation, each battery module of the battery pack is connected in parallel with a load circuit, and the module voltage of the target battery module can be consumed through the load circuit, thus directly reducing the module voltage of the target battery module. As another specific implementation, in order to reduce the module voltage of the target battery module more accurately, the cell voltage of each battery cell in the target battery module may be obtained, wherein each battery module has a plurality of battery cells, and the module voltage of the battery module is equal to the sum of all cell voltages of the battery module. Then, according to the cell voltage of each battery cell, the battery cell with the highest cell voltage is determined as the target battery cell, and then the electricity of the target battery cell is consumed by using the load circuit, thus reducing the module voltage of the target battery module. Each battery cell may be connected in parallel with a load circuit for electricity consumption.

It should be noted here that the above load circuit may be a resistance load circuit, and the resistance load circuit is connected in parallel with the target battery module or the target battery cell. When electricity consumption needs to be performed on the target battery module or the target battery cell, the resistance load circuit may be switched on, so that the electricity of the target battery module or the target battery cell is consumed by the resistance by heating, so as to reduce the module voltage of the target battery module.

In the embodiments of the present disclosure, according to the module voltage of each battery module, the battery module among a plurality of battery modules with the highest module voltage is determined as the target battery module, and then the module voltage of the battery module with the highest module voltage is reduced, thereby reducing the module voltage difference between the battery modules during the charging process of the battery pack, delaying the time when the module voltage difference is larger than the preset voltage difference threshold or the charging switching value is larger than the preset charging switching threshold, and further delaying the time of switching from series charging to parallel charging, so that the duration of battery pack charging in series is prolonged, and the battery pack charging in series has a higher charging efficiency compared with parallel charging, thereby improving the charging efficiency of the battery pack while ensuring that the battery pack does not have safety problems such as lithium precipitation.

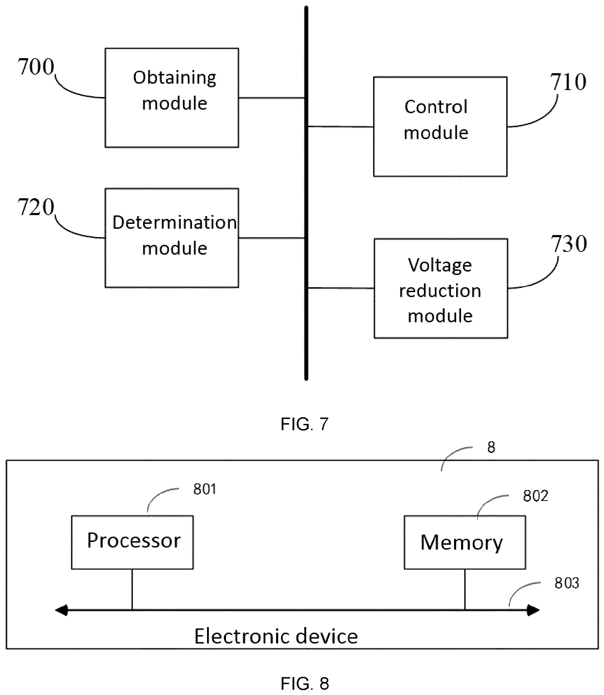

FIG. 7 shows a schematic structural block diagram of a charging apparatus provided by the present disclosure. It should be understood that the apparatus corresponds to the method embodiment shown in FIGS. 2 to 6, and can perform the steps involved in the aforementioned method. The specific functions of the apparatus may be referred to the above description, and detailed description is appropriately omitted here to avoid repetition. The apparatus includes at least one software functional module that can be stored in a memory or solidified in an operating system (OS) of the apparatus in the form of software or firmware. Specifically, the apparatus includes an obtaining module 700 and a control module 710. The obtaining module 700 is configured for obtaining charging parameters of each battery module in a battery pack in a current charging mode, wherein the current charging mode includes a series charging mode. The control module 710 is configured for controlling the plurality of battery modules to switch from the series charging mode to a parallel charging mode after determining, based on the charging parameters of each battery module, that any two battery modules meet a charging switching condition.

In the technical solutions of the embodiments of the present disclosure, in the mode that a plurality of battery modules in a battery pack are charged in series, the charging parameters of each battery module are collected, and then if it is determined, based on the charging parameters of each battery module, that any two battery modules meet a charging switching condition, it indicates that there may be problems such as heating and lithium precipitation caused by the too large charging and discharging current in the series charging mode. On this basis, a plurality of battery modules of the battery pack are controlled to switch from the series charging mode to the parallel charging mode, so that the battery pack can be switched from series charging to parallel charging before the charging and discharging current is too large, thereby reducing the risk of lithium precipitation of the battery, and improving the charging safety of the battery pack.

According to some embodiments of the present disclosure, the charging parameters include the module voltage, and the apparatus further includes a determination module 720, which is specifically configured for: calculating a module voltage difference between every two battery modules in the plurality of battery modules; and if the module voltage difference between any two battery modules exceeds a preset voltage difference threshold, determining that any two battery modules meet the charging switching condition.

According to some embodiments of the present disclosure, optionally, the charging parameters include the battery module voltage and the battery cell temperature, and the determination module 720 is specifically configured for: determining a highest battery cell temperature according to the battery cell temperature of each battery module; calculating a module voltage difference between every two battery modules in the plurality of battery modules; calculating a charging switching value between corresponding two battery modules according to a module voltage difference between every two battery modules and the highest battery cell temperature; and if the charging switching value between any two battery modules exceeds a preset charging switching threshold, determining that any two battery modules meet the charging switching condition.

According to some embodiments of the present disclosure, optionally, the determination module 720 is further specifically configured for: through a charging switching value calculation formula, calculating a charging switching value between corresponding two battery modules according to a module voltage difference between every two battery modules and the highest battery cell temperature, wherein the charging switching value calculation formula is:

$$M = kT + U$$

where M denotes the charging switching value between two battery modules, k denotes a preset coefficient, T denotes the highest battery cell temperature, and U denotes the module voltage difference between the corresponding two battery modules.

According to some embodiments of the present disclosure, the charging parameters include the module voltage, and the determination module 720 is further configured for determining a target battery module among the plurality of battery modules according to the module voltage of each battery module. The apparatus further includes a voltage reduction module 730 for reducing the module voltage of the target battery module.

According to some embodiments of the present disclosure, the determination module 720 is further specifically configured for determining a battery module with a highest module voltage among the plurality of battery modules as the target battery module.

According to some embodiments of the present disclosure, the voltage reduction module 730 is specifically configured for consuming the module voltage of the target battery module by using a load circuit, so as to reduce the module voltage of the target battery module.

According to some embodiments of the present disclosure, the voltage reduction module 730 is further specifically configured for: obtaining a cell voltage of each battery cell in the target battery module; determining a battery cell with a highest cell voltage as a target battery cell; and consuming electricity of the target battery cell by using a load circuit, so as to reduce the module voltage of the target battery module.

According to some embodiments of the present disclosure, as shown in FIG. 8, the present disclosure provides an electronic device 8, which includes a processor 801 and a memory 802. The processor 801 and the memory 802 are interconnected and communicate with each other through a communication bus 803 and/or other connection mechanisms (not shown), and the memory 802 stores a computer program executable by the processor 801, and when a computing device runs, the processor 801 executes the computer program to perform the method performed by an external terminal in any optional implementation, such as step S200 to step S220: obtaining charging parameters of each battery module in a battery pack in a current charging mode; and after determining, based on the charging parameters of each battery module, that any two battery modules meet a charging switching condition, controlling the plurality of battery modules to switch from the series charging mode to a parallel charging mode.

The present disclosure provides a computer-readable storage medium, on which a computer program is stored, and the computer program, when executed by a processor, performs the method in any of the aforementioned optional implementations.

The storage medium may be implemented by any type of volatile or nonvolatile storage device or a combination thereof, such as static random access memory (SRAM), electrically erasable programmable read-only memory (EEPROM), erasable programmable read only memory (EPROM), programmable red-only memory (PROM), read-only memory (ROM), magnetic memory, flash memory, magnetic disk or optical disk.

The present disclosure provides a computer program product which, when run on a computer, causes the computer to perform the method in any optional implementation.

Finally, it should be noted that the above embodiments are only intended to illustrate but not to limit the technical solutions of the present disclosure. Although the present disclosure has been described in detail with reference to the aforementioned embodiments, it should be understood by those ordinarily skilled in the art that the technical solutions described in the aforementioned embodiments may still be modified, or some or all of their technical features may be substituted by equivalents. However, these modifications or substitutions do not make the essence of the corresponding technical solutions deviate from the scope of the technical solutions of various embodiments of the present disclosure, but shall fall within the scope of the claims and specification of the present disclosure. In particular, the technical features referred to in the various embodiments may be combined in any way provided that there is no structural conflict. The present disclosure is not limited to the specific embodiments disclosed herein, but includes all technical solutions falling within the scope of the claims.

**Claims**

1.  A charging method, comprising:

    obtaining charging parameters of each battery module in a battery pack in a current charging mode, wherein the battery pack has a plurality of battery modules, and the current charging mode comprises a series charging mode; and after determining, based on the charging parameters of each battery module, that any two battery modules meet a charging switching condition, controlling the plurality of battery modules to switch from the series charging mode to a parallel charging mode.

2.  The method according to claim 1, wherein the charging parameters comprise a module voltage, and the step of determining, based on the charging parameters of each battery module, that any two battery modules meet a charging switching condition comprises:

    calculating a module voltage difference between every two battery modules in the plurality of battery modules; and when a voltage difference between any two battery modules exceeds a preset voltage difference threshold, determining that any two battery modules meet the charging switching condition.

3.  The method according to claim 1, wherein the charging parameters comprise a battery module voltage and a battery cell temperature, and the step of determining, based on the charging parameters of each battery module, that any two battery modules meet a charging switching condition comprises:

    determining a highest battery cell temperature according to the battery cell temperature of each battery module; calculating a module voltage difference between every two battery modules in the plurality of battery modules; calculating a charging switching value between corresponding two battery modules according to the module voltage difference between every two battery modules and the highest battery cell temperature; and when the charging switching value between any two battery modules exceeds a preset charging switching threshold, determining that any two battery modules meet the charging switching condition.

4.  The method according to claim 3, wherein the step of calculating a charging switching value between corresponding two battery modules according to a module voltage difference between every two battery modules and the highest battery cell temperature comprises:
    through a charging switching value calculation formula, calculating the charging switching value between corresponding two battery modules according to the module voltage difference between every two battery modules and the highest battery cell temperature, wherein the charging switching value calculation formula is:

    $$M = kT + U$$

    where M denotes the charging switching value between two battery modules, k denotes a preset coefficient, T denotes the highest battery cell temperature, and U denotes the module voltage difference between the corresponding two battery modules.

5.  The method according to claim 1, wherein the charging parameters comprise a module voltage; and before the step of determining, based on the charging parameters of each battery module, that any two battery modules meet a charging switching condition, the method further comprises:

    determining a target battery module among the plurality of battery modules according to the module voltage of each battery module; and reducing a module voltage of the target battery module.

6.  The method according to claim 5, wherein the step of determining a target battery module among the plurality of battery modules according to the module voltage of each battery module comprises:
    determining a battery module with a highest module voltage among the plurality of battery modules as the target battery module.

7. The method according to claim 5, wherein the step of reducing a module voltage of the target battery module comprises:
consuming the module voltage of the target battery module by using a load circuit, so as to reduce the module voltage of the target battery module.

8. The method according to claim 5, wherein the step of reducing a module voltage of the target battery module comprises:

   obtaining a cell voltage of each battery cell in the target battery module;
   determining a battery cell with a highest cell voltage as a target battery cell; and
   consuming electricity of the target battery cell by using a load circuit, so as to reduce the module voltage of the target battery module.

9. A charging apparatus, comprising:

   an obtaining module, configured for obtaining charging parameters of each battery module in a battery pack in a current charging mode, wherein the current charging mode comprises a series charging mode; and
   a control module, configured for controlling the plurality of battery modules to switch from the series charging mode to a parallel charging mode after determining, based on the charging parameters of each battery module, that any two battery modules meet a charging switching condition.

10. An electronic device, comprising a memory and a processor, wherein the memory stores a computer program, and the processor, when executing the computer program, performs the method according to any one of claims 1 to 8.

11. A computer-readable storage medium, on which a computer program is stored, wherein the computer program, when executed by a processor, performs the method according to any one of claims 1 to 8.

<u>10</u>

FIG. 1

Obtain charging parameters of each battery module in a battery pack in a current charging mode — S200

After determining, based on the charging parameters of each battery module, that any two battery modules meet a charging switching condition, control the plurality of battery modules to switch from the series charging mode to a parallel charging mode — S210

FIG. 2

FIG. 3

| Calculate a module voltage difference between every two battery modules in the plurality of battery modules | S400 |

| If the module voltage difference between any two battery modules exceeds a preset voltage difference threshold, determine that any two battery modules meet the charging switching condition | S410 |

FIG. 4

| Determine a highest battery cell temperature according to the battery cell temperature of each battery module | S500 |

↓

| Calculate a module voltage difference between every two battery modules in the plurality of battery modules | S510 |

↓

| Calculate a charging switching value between corresponding two battery modules according to a module voltage difference between every two battery modules and the highest battery cell temperature | S520 |

↓

| If the charging switching value between any two battery modules exceeds a preset charging switching threshold, determine that any two battery modules meet the charging switching condition | S530 |

FIG. 5

| Obtain charging parameters of each battery module in a battery pack in a current charging mode | S200 |

↓

| Determine a target battery module among the plurality of battery modules according to the module voltage of each battery module | S600 |

↓

| Reduce the module voltage of the target battery module | S610 |

↓

| After determining, based on the charging parameters of each battery module, that any two battery modules meet a charging switching condition, control the plurality of battery modules to switch from the series charging mode to a parallel charging mode | S210 |

FIG. 6

FIG. 7

FIG. 8

## INTERNATIONAL SEARCH REPORT

| International application No. |
|---|
| **PCT/CN2022/093641** |

**A. CLASSIFICATION OF SUBJECT MATTER**

H02J 7/00(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNTXT, DWPI, ENTXTC, CNKI: 串联, 并联, 充电, 切换, 温度, 电压, series connection, parallel connection, charge, change, temperature, voltage

**C. DOCUMENTS CONSIDERED TO BE RELEVANT**

| Category* | Citation of document, with indication, where appropriate, of the relevant passages | Relevant to claim No. |
|---|---|---|
| X | CN 101262140 A (LIU, Yunhai et al.) 10 September 2008 (2008-09-10) description, pages 2-8, and figures 1-5 | 1-11 |
| X | CN 113451669 A (BEIJING XIAOMI MOBILE SOFTWARE CO., LTD.) 28 September 2021 (2021-09-28) description, paragraphs 0049-0095, and figures 1-14 | 1-11 |
| A | CN 106786998 A (VIVO COMMUNICATION TECHNOLOGY CO., LTD.) 31 May 2017 (2017-05-31) entire document | 1-11 |
| A | JP 09266638 A (SANYO ELECTRIC CO., LTD.) 07 October 1997 (1997-10-07) entire document | 1-11 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/093641**

| Patent document cited in search report | | | Publication date (day/month/year) | Patent family member(s) | | | Publication date (day/month/year) |
|---|---|---|---|---|---|---|---|
| CN | 101262140 | A | 10 September 2008 | CN | 101262140 | B | 02 June 2010 |
| CN | 113451669 | A | 28 September 2021 | | None | | |
| CN | 106786998 | A | 31 May 2017 | | None | | |
| JP | 09266638 | A | 07 October 1997 | JP | 3481037 | B2 | 22 December 2003 |

Form PCT/ISA/210 (patent family annex) (January 2015)